Europäisches Patentamt

European Patent Office

Office européen des brevets

(19)

(11) Numéro de publication : **0 039 293**
**B1**

# (12) FASCICULE DE BREVET EUROPÉEN

(45) Date de publication du fascicule du brevet :
**03.04.85**

(51) Int. Cl.⁴ : **G 01 L 27/00**

(21) Numéro de dépôt : **81400669.8**

(22) Date de dépôt : **28.04.81**

(54) **Dispositif pour la mesure très précise des pressions de fluide avec affichage de la pression mesurée.**

(30) Priorité : **30.04.80 FR 8009889**

(43) Date de publication de la demande :
**04.11.81 Bulletin 81/44**

(45) Mention de la délivrance du brevet :
**03.04.85 Bulletin 85/14**

(84) Etats contractants désignés :
**DE FR GB**

(56) Documents cités :
**DE-A- 1 573 621**
**DE-A- 2 901 460**
**CONTROL AND INSTRUMENTATION, vol. 11, no. 5, mai 1979, pages 29-31 London, G.B. "Pressure measurement standards for laboratory and production use"**

(73) Titulaire : **Delajoud, Pierre**
**109, rue de Longchamp**
**F-92200 Neuilly sur Seine (FR)**

**DESGRANGES & HUOT**
**10, rue Bernard et Mazoyer**
**F-93300 Aubervilliers (FR)**

(72) Inventeur : **Delajoud, Pierre**
**109, rue de Longchamp**
**F-92200 Neuilly sur Seine (FR)**

(74) Mandataire : **Lecca, Jean et al**
**CABINET PLASSERAUD 84, rue d'Amsterdam**
**F-75009 Paris (FR)**

## 0 039 293

### Description

L'invention a pour objet un dispositif pour la mesure très précise d'une pression de fluide, tel que défini dans le préambule de la revendication 1. Elle trouve notamment une application dans la mesure des pressions du fluide, notamment de gaz et de fluides hydrauliques, avec une très grande précision, en particulier pour réaliser des étalons de pression aptes à permettre la vérification et l'étalonnage des manomètres, ainsi que des capteurs et transmetteurs de pression.

On connaît des étalons de pression, commercialisés par la demanderesse, qui comportent essentiellement un cylindre à axe vertical de haute précision dans lequel coulisse un piston dont la partie supérieure porte un plateau horizontal, des moyens étant prévus pour entraîner en rotation le piston dans le cylindre afin de bien le centrer dans celui-ci. La pression à mesurer, qui agit sur la face inférieure du piston, est équilibrée par des masses calibrées posées sur le plateau. En appelant M la masse totale agissant sur le piston de haut en bas, S la section effective de l'ensemble cylindre-piston sur laquelle agit, de bas en haut, la pression P à mesurer et g l'accélération de la pesanteur, on a

$$P = Mg/S \qquad (1)$$

De tels étalons de pression sont très précis, mais ils exigent l'utilisation d'une série de masses calibrées de grande précision, réalisées par exemple en acier inoxydable, d'un prix élevé, ainsi que des moyens de pose et d'enlèvement automatiques des masses sur le plateau. Par ailleurs la manipulation des masses demande un certain temps, car il faut réaliser l'équilibrage du système au moyen d'un certain nombre de masses, et il faut ensuite lire les indications portées sur les masses et en faire le total afin d'obtenir M. On détermine ensuite la pression P par la formule précitée (1). Parfois, pour faciliter les mesures, les masses portent également une indication de pression correspondant à une section effective S bien déterminée.

La présente invention vise à faciliter et à accélérer la mesure de la pression en permettant un affichage instantané, de préférence sous forme numérique (ou digitale), de la masse M et donc de la pression P.

L'invention permet, au lieu d'équilibrer la pression par une masse totale constituée par une série de masses élémentaires calibrées (comme dans la technique antérieure), de « peser » cette pression, c'est-à-dire de faire agir la pression sur une balance qui mesure la force correspondant à cette pression (on sait qu'une pression est égale à une force divisée par la surface sur laquelle cette force est appliquée).

Pour avoir une détermination très précise de la pression et un affichage immédiat de celle-ci, on réalise cette « pesée » au moyen d'une balance de grande précision à affichage immédiat, notamment d'une balance à rééquilibrage électromagnétique, appelée ci-après simplement balance électromagnétique. Il s'agit d'une balance dynamométrique.

L'invention a donc pour objet un dispositif pour la mesure très précise des pressions de fluide, tel que caractérisé dans la partie caractérisante de la revendication 1.

De préférence la vitesse de rotation du piston correspond à une durée de rotation complète de celui-ci dans le cylindre qui est inférieure au temps d'intégration du dispositif électronique de mesure de la balance pour avoir un affichage stable déterminé par la moyenne des forces appliquées au piston au cours de sa rotation suivant un tour complet.

On prévoit avantageusement des moyens pour limiter le couple du moteur d'entraînement en rotation du piston en cas de blocage du piston dans le cylindre, sous l'effet d'une surpression par exemple.

Dans le mode de réalisation préféré, l'unité de mesure, comprenant essentiellement le cylindre et le piston, est interchangeable, ce qui permet d'utiliser, avec la même balance, différents éléments de mesure comportant des sections effectives, sur lesquelles est appliquée la pression à mesurer, de dimensions différentes, ce qui permet de mesurer, avec une excellente précision, des pressions dans des gammes de valeurs très différentes.

Avec un dispositif selon l'invention, on peut mesurer des surpressions ou des dépressions par rapport à la pression atmosphérique.

Avantageusement, les sections effectives des éléments de mesure sont choisies pour que, dans les conditions normales de pression et de température et pour la valeur normale de g, un nombre entier et simple de bars (ou de livres par pouce carré) soit équilibré par une masse de 1 kg.

L'invention sera décrite en détail avec référence aux dessins ci-annexés, sur lesquels :

La figure 1 représente, dans son ensemble, un premier mode de réalisation d'un dispositif selon l'invention, avec coupe axiale partielle.

La figure 2 est une coupe axiale, à plus grande échelle, de la partie supérieure de la figure 1, à savoir de l'ensemble agissant sur la balance électromagnétique proprement dite, avec les moyens de transmission de la force du piston à l'axe de la balance.

La figure 3 représente la balance électromagnétique avec les moyens de transmission de la force, ces derniers portant des masses calibrées pour réaliser l'étalonnage de la balance, ces moyens et ces masses étant représentés en coupe axiale.

La figure 4 enfin, est une coupe axiale, analogue à celle de la figure 2, mais concernant un second

2

mode de réalisation de l'ensemble agissant sur la balance électromagnétique proprement dite, avec les moyens de transmission de la force.

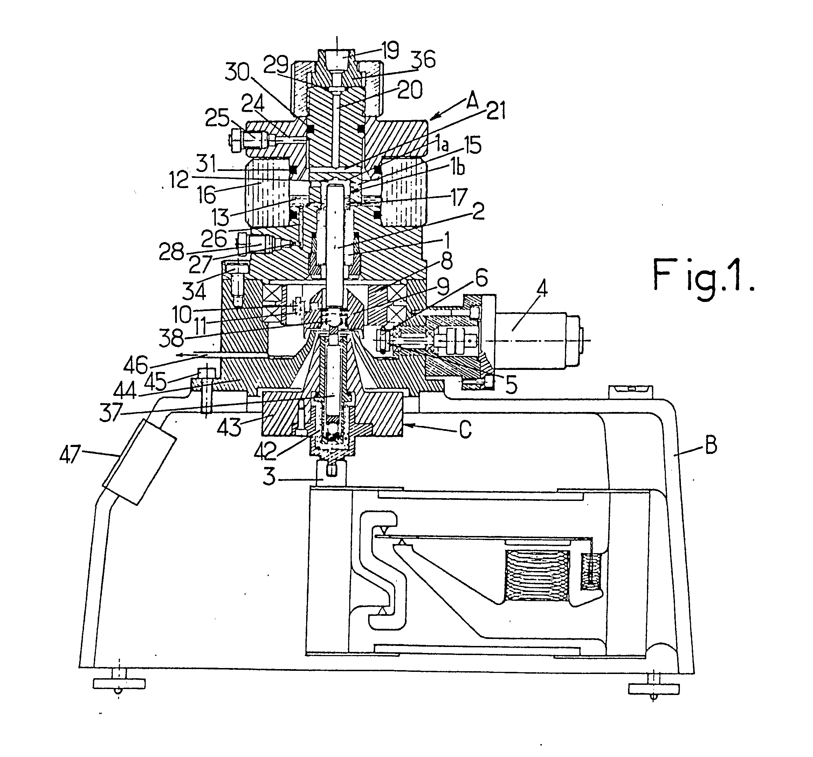

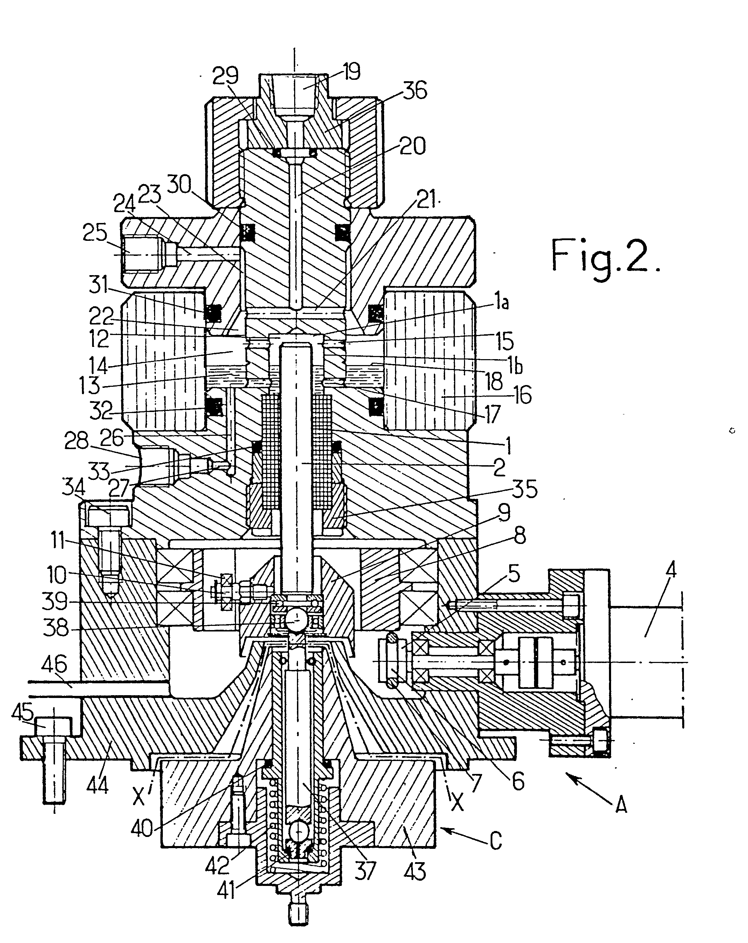

En se référant tout d'abord aux figures 1 et 2, on voit qu'un dispositif selon l'invention comprend trois ensembles, à savoir un ensemble A comportant essentiellement l'unité de mesure avec le cylindre 1 et le piston 2, une balance électromagnétique B avec un arbre 3 destiné à recevoir la force à mesurer et un ensemble de liaison C transmettant la force du piston 2 de l'ensemble A à l'arbre 3 de la blance B. La figure 1 représente l'ensemble des éléments A, B et C, tandis que la figure 2 n'illustre, mais à plus grande échelle, que les ensembles A et C qui sont séparés, sur cette figurine, par la ligne XX en traits interrompus.

L'ensemble A (voir plus particulièrement la figure 2) comprend tout d'abord, comme indiqué ci-dessus, un cylindre 1 et un piston 2 qui constituent, à eux deux, l'unité de mesure proprement dite. Le cylindre 1 est vertical.

Le cylindre 1 est monté dans un bloc de mesure 1b qui comporte un fond ou culasse 1a à sa partie supérieure.

Le piston 2 peut coulisser verticalement dans le cylindre 1 dans lequel il se déplace à frottement visqueux, une pellicule de fluide hydraulique étant interposée entre les deux.

Le piston 2 est entraîné en rotation, dans le cylindre 1 au moyen d'un moteur électrique 4 faisant tourner une poulie 5 qui porte, dans une gorge 6, une bague torique 7 (en un élastomère) frottant sur la périphérie d'une poulie 8 qui entraîne en rotation, à son tour, la tête 9 du piston 2 solidarisée en rotation à la poulie 8 par un axe 10 portant un roulement 11. On remarquera que, grâce à la bague 7, on réalise un entraînement par friction qui limite le couple du moteur 4 en cas de blocage du piston 2 sous l'effet d'une surpression agissant sur le piston 2 de haut en bas.

La pression à mesurer est appliquée à la chambre 12 existant entre le fond 1a du cylindre 1 et l'extrémité supérieure du piston 2.

Lorsqu'il s'agit de mesurer une pression de gaz, on prévoit une quantité d'huile 13 dans la partie inférieure d'une chambre annulaire 14 qui entoure le bloc de mesure 1b et qui communique avec la chambre 12 par des canaux radiaux 15 et 17. Le niveau 18 d'huile dans la chambre 14 peut être repéré facilement grâce à une enveloppe 16 en un verre organique incassable, par exemple en méthacrylate de méthyle. Ce niveau d'huile règne également à l'intérieur de la chambre 12 grâce aux canaux radiaux 17. Le niveau 18 de l'huile dans la chambre 14 doit donc être maintenu entre les canaux 15 et les canaux 17. C'est sur l'embouchure 19, qui communique par des canaux 20, 21 et un évidement tronconique 22 avec la chambre 14, et donc finalement avec la chambre 12, qu'est appliquée la pression à mesurer.

Lorsqu'il s'agit de mesurer une pression d'huile (ou autre fluide hydraulique), on remplit d'huile les chambres 12 et 14 par l'évidement tronconique 22 et les canaux 21 et 20, en appliquant la pression d'huile à l'embouchure 19 ; grâce aux canaux 23 et 24, on purge, par l'ouverture 25, les chambres 12 et 14 du gaz qu'elles contiennent. En fin d'opération, on vidange l'huile par les canaux 26 et 27 et l'ouverture d'évacuation 28.

Sur la figure 2 on a représenté une série de joints toriques 29, 30, 31, 32 et 33 assurant l'étanchéité aux fluides.

On peut changer l'élément de mesure 1, 2 en agissant sur les vis 34 et l'écrou 35. L'écrou 36 permet de changer l'embouchure 19 constituant un raccord et le nettoyage de la chambre annulaire 14.

En définitive, dans l'ensemble A la pression de gaz ou de fluide hydraulique, qu'il y a lieu de mesurer, agit sur le piston 2, la force que celui-ci reçoit correspondant au produit de la surface effective du piston (déterminée ci-après) par la pression à mesurer agissant sur le piston 2 de haut en bas.

L'ensemble C sert à transmettre cette force à l'arbre 3 de la balance qui en permet la mesure. Cet ensemble C a pour objet de transmettre cette force tout en limitant celle-ci en cas de surpression agissant sur le piston 2. L'organe de transmission de la force de l'ensemble C est constitué par une bielle 37.

Du fait de la rotation du piston 2, des précautions particulières doivent être prises pour la transmission de la force entre le piston 2 et l'arbre 3 (figure 1). A cet effet on prévoit une butée à bille 38 avec un roulement 39 à la partie supérieure de la bielle 37 dans la tête inférieure du piston 2, de façon à pouvoir les centrer parfaitement par rapport à l'axe du piston 2 et à l'axe de la bielle 37 par l'intermédiaire de la bille 38.

La limitation et l'amortissement de la force appliquée par le piston 2 sur l'arbre 3 de la balance, afin de protéger celle-ci, sont réalisés grâce à un amortisseur double 40, 41 et un limiteur de charge 42, le tout étant logé dans une pièce 43 dont la partie supérieure tronconique est disposée dans une pièce coopérante 44 de l'ensemble A et sur laquelle bute la tête de piston 9 en cas de surcharge.

Enfin l'évacuation de l'huile usée de graissage est réalisée par un canal 46 aménagé dans la pièce 44.

On peut désolidariser l'ensemble A de l'ensemble B constituant la balance proprement dite (figure 1) grâce aux vis 45.

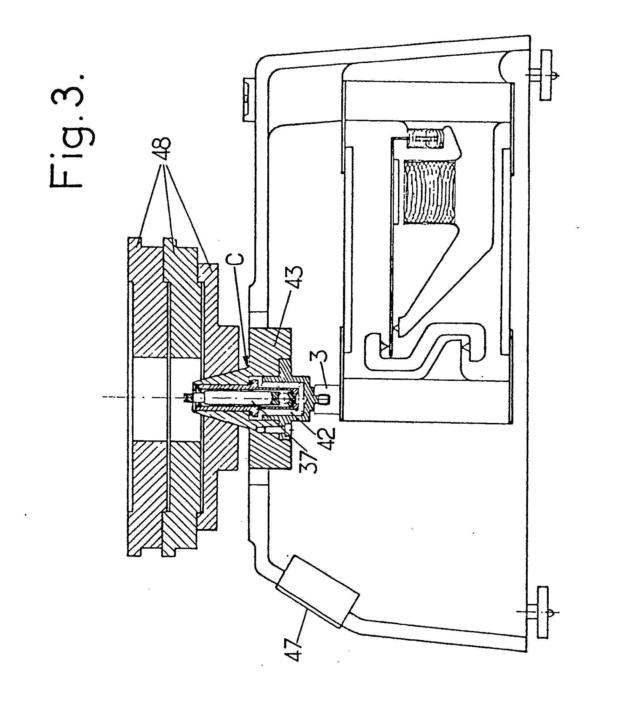

Quant à l'ensemble B, celui-ci ne sera pas décrit en détail étant donné qu'il est constitué par une balance électromagnétique de précision de type classique. A titre d'exemple de telles balances, on peut citer les balances électroniques de précision de la société suisse METTLER, de la série PL, les balances électroniques de la société allemande SARIORIUS, les balances des sociétés allemandes KERN et SAUTER. De telles balances affichent directement, de préférence sous forme numérique (ou digitale), sur un cadran 47, la force due aux masses appliquées sur leur axe 3. Sur les figures 1 et 3 on a illustré

3

schématiquement l'intérieur de la balance essentiellement pour montrer qu'elle comprend des moyens de rééquilibrage électromagnétique de la force appliquée sur l'axe 3.

Comme indiqué précédemment, l'élément de mesure proprement dit, constitué par le cylindre 1 et le piston 2, est interchangeable, de manière à pouvoir mettre en œuvre dans le même dispositif différentes sections effectives, ce qui permet de mesurer, en restant dans la gamme de précision de la balance, des valeurs très différentes de la pression.

Avantageusement les sections effectives théoriques des éléments de mesure interchangeables sont telles que, dans les conditions normales de pesanteur terrestre (9,806 65 m/s$^2$), de pression atmosphérique (1,013 25 bar) et à la température de 20 °C, en chargeant le piston d'une masse en acier inoxydable de 1 kg, on équilibre un nombre entier et simple de bars (ou de psi).

Ce nombre entier est propre à chaque élément de mesure et est appelé le coefficient normal de conversion (KN).

Il a pour définition :

$$KN = g_n(1 - \rho_{air}/\rho_{inox})/S_{th} \qquad (2)$$

$g_n$ étant l'accélération de la pesanteur normale, $S_{th}$ la section effective théorique moyenne des deux sections du cylindre et du piston (pour les différentes positions du piston qui tourne dans le cylindre) et $\rho_{air}$ et $\rho_{inox}$ les masses volumiques ou les densités de l'air et de l'acier inoxydable respectivement.

A partir de ce coefficient de conversion KN, la pression est donnée par la formule

$$P = KN \cdot M \qquad (3)$$

dans les conditions normales et avec un piston dont la section effective est exactement égale à la section théorique dont on vient de donner la définition.

En fait la section effective réelle (S réelle) d'un élément de mesure est, en général, légèrement différente de la section théorique ($S_{th}$) recherchée à cause des tolérances de fabrication.

Cette section réelle est déterminée avec grande précision par comparaison avec des étalons de pression absolus de type antérieur raccordés aux étalons nationaux. La pesanteur terrestre locale ($g_l$) au lieu d'utilisation de l'élément de mesure est, en général, différente de la pesanteur normale ($g_n$) ; il en résulte que, pour une température de 20 °C, l'expression générale de la pression mesurée par un élément chargé d'une masse en acier inoxydable M est :

$$P = KN \cdot S_{th}/S \text{ réelle} \cdot g_l/g_n \cdot M \qquad (4)$$

La procédure d'autoétalonnage de l'instrument est la suivante : la pesanteur au lieu d'étalonnage étant $g_l$, on pose une masse M correspondant à la portée maximale sur la balance et l'on règle le gain de la balance de façon que l'affichage numérique de la balance indique la valeur

$$V = S_{th} \cdot g_l/S \text{ réelle} \cdot g_n \cdot M \qquad (5)$$

Ainsi, si l'on remplace la masse M par un élément de mesure de coefficient normal de conversion KN soumis à une pression P, la détermination de la pression est effectuée à partir de l'expression générale par le produit :

$$P = KN \cdot V \qquad (6)$$

Il faut noter qu'une fois cet étalonnage effectué, la relation ci-dessus est valable pour toutes les valeurs que peut prendre V, correspondant à différentes valeurs de P.

D'autre part cet autoétalonnage reste valable même si l'instrument, une fois réglé, est utilisé en un lieu où la pesanteur locale est différente de celle du lieu de calibrage.

Par contre, si l'on veut vérifier le calibrage à ce nouvel emplacement, il est nécessaire de recalculer une nouvelle valeur de V à afficher correspondant à la nouvelle valeur de $g_l$.

Le couplage réalisé selon l'invention entre un élément de mesure, constitué par un cylindre 1 et un piston 7, et une balance électromagnétique, dont le gain a été ajusté comme indiqué ci-dessus, permet de réaliser un dispositif dont on peut à tout moment vérifier le calibrage grâce à des masses 48 placées pour agir sur la bielle 37 et donc sur l'arbre 3 de la balance, et ceci sans avoir à faire appel à un étalonnage de pression extérieur. Il s'agit donc d'un dispositif autoétalonnable (car il n'y a pas besoin d'étalon de pression extérieur).

La rotation du piston 2 dans le cylindre 1 permet une bonne sensibilité et une bonne répétabilité des mesures, car elle assure le centrage du piston par la création d'un film d'huile uniforme dans le jeu entre le piston et le cylindre. Cette mise en rotation du piston implique la liaison entre le piston 2 et l'arbre 3 de la balance, mais on a indiqué ci-dessus comment l'ensemble de liaison C permet de réaliser une telle liaison avec transmission de la force, mais avec limitation en cas de surpression et filtration des effets parasites dus à la rotation du piston.

On choisit avantageusement la vitesse de rotation du piston 1 dans le cylindre 2 pour que le piston effectue une rotation complète pendant une durée qui est inférieure à la durée d'intégration, c'est-à-dire la cadence de mesure, du dispositif électronique de la balance, ce qui permet d'avoir un affichage stable en 47 en éliminant les fluctuations de la mesure dues à la rotation du piston. Généralement, la cadence de mesure de la balance est comprise entre 0,2 et 1 seconde et dans ce cas la vitesse de rotation du piston doit être supérieure à 5 à 1 tours par seconde.

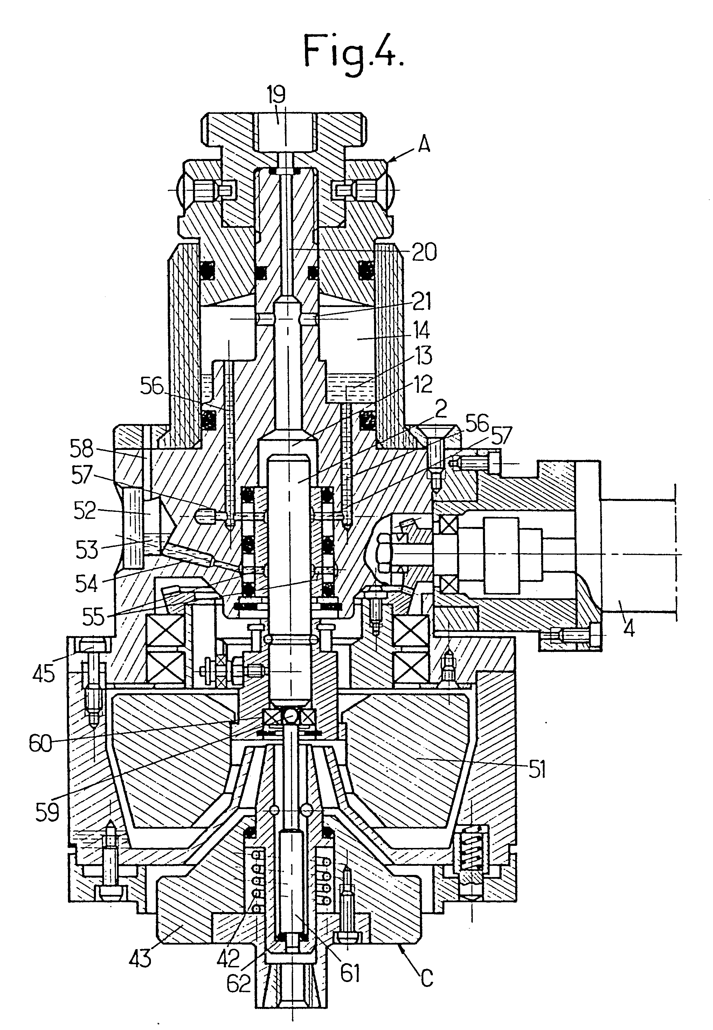

Sur la figure 4, on a illustré les ensembles A et C selon un second mode de réalisation de l'invention, en utilisant les mêmes nombres de référence que sur les figures 1 à 3 pour désigner les éléments correspondants.

Le mode de réalisation de la figure 4 se distingue de celui des figures 1 à 3 :

a) par une pièce annulaire 51 destinée à charger le piston 2 afin de permettre la mesure tant des dépressions que des surpressions par rapport à la pression atmosphérique,

b) par le système de graissage du piston 2 et

c) par la liaison entre le piston 2 et la balance électromagnétique.

La pièce annulaire 51 pèse par exemple 1 kg et elle est destinée à créer un décalage ou biais d'origine de l'affichage de la pression sur la bascule.

La pression à mesurer agit toujours sur l'embouchure 19 et donc sur la face supérieure du piston 2 dans la chambre 12 en communication avec l'embouchure 19.

Lorsque c'est la pression atmosphérique qui agit sur l'embouchure 19, la balance affiche une valeur numérique supérieure à 10 000 points du fait de la pièce 51.

On ramène à zéro cette valeur numérique en agissant sur les moyens de réglage de la balance électromagnétique.

Lorsqu'on mesure ensuite une pression, qui agit sur l'embouchure 19 :

si cette pression est inférieure à la pression atmosphérique (il s'agit alors d'une dépression), la balance affiche un nombre de points compris entre 0 et − 10 000 ;

si cette pression est supérieure à la pression atmosphérique (il s'agit alors d'une surpression), la balance affiche un nombre de points supérieur à 0 (par exemple compris entre 0 et + 30 000).

Dans le mode de réalisation de la figure 4, on a prévu un double système de graissage avec deux réservoirs 52 et 14 pour l'huile de graissage.

Lorsque la pression appliquée à l'embouchure 19 est inférieure à la pression atmosphérique l'huile 53 de réservoir 52 atteint, par les canaux 54 et 55, la périphérie du piston 2 qui tourne dans le cylindre 1.

Au contraire, lorsque la pression appliquée à l'embouchure 19 est supérieure à la pression atmosphérique l'huile 13 du réservoir 14 atteint, par les canaux 56 et 57, la périphérie du piston 2 qui tourne dans le cylindre 1.

Il y a lieu de noter que c'est la différence entre la pression agissant sur l'embouchure 19 et la pression atmosphérique agissant par le canal 58 dans le réservoir 52 et par les canaux 20 et 21 dans le réservoir 14 qui provoque automatiquement le premier ou le second type de graissage.

La transmission de la pression depuis le piston 2 sur la balance est réalisée par une bille 59 (par exemple en carbure de tungstène) centrée par un roulement 60, et une tige 61 agissant sur la partie supérieure de la balance B (figures 1 et 3) par l'intermédiaire d'un amortisseur constitué par une bague torique 62.

En faisant le vide dans un espace communiquant avec l'embouchure 19, il est possible de réaliser un baromètre avec le mode de réalisation de la figure 4. On peut ainsi mesurer la pression atmosphérique avec une précision de 0,1 millibar. Un tel baromètre est très fidèle, très précis et très fiable.

Bien entendu, l'ensemble des dispositions a et b d'une part, et la disposition c d'autre part, sont indépendants et il est donc possible de modifier le mode de réalisation des figures 1 à 3 en lui faisant comporter seulement l'ensemble des dispositions a et b ou bien seulement la modification c.

On notera que le dispositif selon l'invention présente un certain nombre d'avantages dont certains ont déjà été indiqués, notamment les suivants :

— possibilité de la mesure d'une pression de gaz sans que la variation du niveau d'huile dans le réservoir 14 intervienne sur la mesure ;

— possibilité de mesurer une pression d'huile en remplissant complètement ce réservoir ;

— faible influence de l'entraînement en rotation du piston sur l'affichage de la pression mesurée, grâce à une bonne perpendicularité du plan de rotation de la poulie 8 par rapport à l'axe du piston 2 et à la vitesse de rotation choisie ;

— limitation du couple du moteur en cas de blocage du piston par surpression grâce à l'utilisation d'un entraînement à friction entre la poulie 5 et la poulie 8 (bague 7) ;

— démontage facile de l'élément de mesure, ce qui permet d'utiliser des éléments de mesure (pistons et cylindres) ayant des sections effectives différentes, d'où excellente précision de la mesure dans une gamme étendue de pressions ;

— démontage facile du bloc de mesure (ensemble A), ce qui permet de pouvoir poser directement sur les ensembles B et C (figure 3) des masses afin de réaliser un autoétalonnage ; le fait de pouvoir placer plusieurs masses 48, comme illustré sur la figure 3, permet de vérifier la linéarité de la balance ;

— évacuation de l'huile usée (par le canal 46) pour éviter la pollution de la balance ;

— possibilité d'utiliser, comme ensemble C, une balance électromagnétique standard après lui avoir apporté des transformations très limitées, ce qui permet en outre de continuer à l'utiliser pour la pesée des masses ;

— possibilité de mesurer des surpressions ou des dépressions (par rapport à la pression atmosphérique).

Le dispositif selon l'invention présente en définitive l'avantage, sur les dispositifs de la technique antérieure, d'éviter l'emploi d'une série de masses calibrées en acier inoxydable, qui sont coûteuses et dont la manipulation est longue et souvent pénible ; le dispositif selon l'invention évite également la mise en œuvre de moyens de pose et d'enlèvement automatiques de masses calibrées, moyens qui sont encombrants et qui coûtent cher ; en outre, on obtient un affichage automatique, notamment numérique (ou digital), ce qui accroît encore la commodité d'emploi et permet le transfert de l'information vers des systèmes d'acquisition et de traitement des données.

Enfin, la précision est excellente dans une large gamme de valeurs de la pression.

## Revendications

1. Dispositif pour la mesure très précise d'une pression de fluide et l'affichage de cette mesure, comprenant une unité de mesure (A) comportant un cylindre (1) vertical et un piston (2) vertical apte à coulisser dans ledit cylindre (1) à frottement visqueux, ledit piston (2) ayant une extrémité supérieure et une extrémité inférieure caractérisé en ce que ledit piston (2) vertical est apte à tourner à frottement visqueux dans ledit cylindre (1) vertical et en ce qu'il comprend en outre : une balance (B) dynamométrique électromagnétique de précision comportant un arbre (3) vertical avec une extrémité supérieure et des moyens (47) d'affichage aptes à afficher la force appliquée sur l'extrémité supérieure dudit arbre (3) vertical des moyens pour recevoir ladite unité de mesure (A) d'une manière amovible sur ladite balance (B) ; des moyens (C) pour connecter l'extrémité inférieure dudit piston (2) à l'extrémité supérieure dudit arbre (3) de manière à transmettre à cette extrémité supérieure la force à laquelle est soumise cette extrémité inférieure, avec limitation de la force maximale transmise ; des moyens (4-11) pour entraîner en rotation ledit piston (2) dans ledit cylindre (1) ; et des moyens (12-24) de transmission de pression pour appliquer la pression à mesurer à l'extrémité supérieure dudit piston (2).

2. Dispositif selon la revendication 1, caractérisé en ce que lesdits moyens (C) pour connecter l'extrémité inférieure dudit piston (2) à l'extrémité supérieure dudit arbre (3) comprennent une bielle (37) et un roulement (39) disposé dans la tête inférieure du piston (2).

3. Dispositif selon la revendication 2, caractérisé en ce que lesdits moyens (C) pour connecter comprennent en outre une butée à bille (38).

4. Dispositif selon la revendication 2 ou 3, caractérisé en ce que l'on prévoit, à l'extrémité de ladite bielle (37), un amortisseur (40, 41) double et, en outre, un limiteur de charge (42) associé à ladite bielle (37).

5. Dispositif selon la revendication 1, caractérisé en ce que lesdits moyens (C) pour connecter l'extrémité inférieure dudit piston (2) à l'extrémité supérieure dudit arbre (3) comprennent une bille (59), des moyens (60) pour centrer ladite bille (59) suivant l'axe du piston (2), une tige (61) en contact avec ladite bille (59) et un amortisseur (62) en contact avec ladite bille (59).

6. Dispositif selon l'une quelconque des revendications précédentes, caractérisé en ce que la vitesse de rotation du piston (2) correspond à une durée de rotation complète de celui-ci dans le cylindre (1) qui est inférieure au temps d'intégration du dipositif électronique de mesure de la balance (B) pour avoir un affichage stable déterminé par la moyenne des forces appliquées au piston (2) au cours de sa rotation suivant un tour complet.

7. Dispositif selon l'une quelconque des revendications précédentes, caractérisé en ce qu'il comprend des moyens (6, 7) pour limiter le couple des moyens (4) pour entraîner en rotation le piston (2) dans le cylindre (1) en cas de blocage du piston (2) dans le cylindre (1), sous l'effet d'une surpression par exemple.

8. Dispositif selon l'une quelconque des revendications précédentes, caractérisé en ce que ladite unité de mesure (A) est interchangeable, la section effective de l'ensemble cylindre-piston (1, 2) de l'unité de mesure (A) variant d'une unité à l'autre afin de permettre de mesurer des gammes de pression différentes dans la même zone de mesure de la balance (B).

9. Dispositif selon l'une quelconque des revendications précédentes, caractérisé en ce que la section effective de l'ensemble cylindre-piston (1, 2) de l'unité de mesure (A) est choisie pour que, dans les conditions normales de pression et de température et pour la valeur normale de l'accélération de la pesanteur, un nombre entier et simple de bars (ou de livres par pouce carré) soit équilibré par une masse de 1 kg.

10. Dispositif selon l'une quelconque des revendications précédentes, caractérisé en ce que ladite unité de mesure (A) est séparable des moyens (C) pour connecter l'extrémité inférieure du piston (2) à l'extrémité supérieure de l'arbre (3), afin de pouvoir appliquer sur ces moyens des masses (4B) calibrées correspondant à la zone de mesure de la balance (B), ce qui rend le dispositif autoétalonnable.

11. Dispositif selon l'une quelconque des revendications précédentes, caractérisé en ce qu'il comprend une pièce (51) dont le poids s'ajoute à la force appliquée par le piston (2) sur ledit arbre (3), ce qui permet de mesurer tant une dépression qu'une surpression par rapport à la pression atmosphérique.

12. Dispositif selon la revendication 11, caractérisé en ce qu'il comporte un circuit double de graissage, avec deux réservoirs (14, 52) séparés, le fluide lubrifiant contenu dans l'un (52) des deux réservoirs servant à réaliser le graissage du piston (2) lors de la mesure d'une dépression, tandis que le fluide lubrifiant contenu dans l'autre (14) des deux réservoirs sert à réaliser le graissage du piston (2) lors de la mesure d'une surpression.

**Claims**

1. Device for the very accurate measurement of a fluid pressure and for the display of this measurement characterised the said vertical piston (2) can turn with viscous friction in the said vertical cylinder (1) and in that it comprises furthermore : a precision electromagnetic dynamometric balance (B) comprising a vertical shaft (3) with an upper end and with display means (47) capable of displaying the force applied to the upper end of the said vertical shaft (3), comprising a measuring unit (A) comprising a vertical cylinder (1) and a vertical piston (2) adapted to slide with viscous friction within the said cylinder (1), the said piston (2) having an upper end and a lower end ; means of receiving the said measuring unit (A) in detachable fashion on the said balance (B) ; means (C) of connecting the lower end of the said piston (2) to the upper end of the said shaft (3) in such a way as to transmit to this upper end the force to which the said lower end is subjected, with limitation of the maximum force transmitted ; means (4-11) for imparting a rotary drive to the said piston (2) within the said cylinder (1) and means (12-24) for the transmission of pressure in order to apply the pressure to be measured to the upper end of the said piston (2).

2. Device according to Claim 1, characterised in that the said means (C) for connecting the lower end of the said piston (2) to the upper end of the said shaft (3) comprise a connecting rod (37) and a roller bearing (39) disposed in the lower head of the piston (2).

3. Device according to Claim 2, characterised in that the said means (C) of establishing the connection furthermore comprise a ball abutment (38).

4. Device according to Claim 2 or 3, characterised in that, at the end of the said connecting rod (37), there is provided a double shock-absorber (40, 42) and, furthermore, associated with the said connecting rod (37), a load limiting device (42).

5. Device according to Claim 1, characterised in that the said means (C) of connecting the lower end of the said piston (2) to the upper end of the said shaft (3) comprise a ball (49), means (60) of centring the said ball (59) according to the axis of the piston (2), a rod (12) in contact with the said ball (59) and a shock-absorber (62) in contact with the said ball (59).

6. Device according to any one of the preceding Claims, characterised in that the speed of rotation of the piston (2) corresponds to the period of a complete rotation of the piston in the cylinder (1), which is less than the time required for integration of the electronic measuring device of the balance (B) in order to have a stable display determined by the average of the forces applied to the piston (2) during the course of its rotation according to one complete revolution.

7. Device according to any one of the preceding Claims, characterised in that it comprises means (6, 7) of limiting the torque of the means (?4 — almost illegible, Translator) of producing a rotary movement of the piston (2) within the cylinder (1) in the event of the piston (2) becoming jammed within the cylinder (1) under the effect of an over-pressure, for example.

8. Device according to any one of the preceding Claims, characterised in that the said measuring unit is interchangeable, the effective cross-section of the cylinder-piston assembly (1, 2) of the measuring unit (A) varying from one unit to the other in order to permit of measurement of different ranges of pressure within the same measuring zone of the balance (B).

9. Device according to any one of the preceding Claims, characterised in that the effective cross-section of the cylinder-piston assembly (1, 2) of the measuring unit (A) is chosen so that, under normal conditions of pressure and temperature and for normal values of acceleration of the (Translator's Note ; handwritten word inserted between lines 29 and 30 unfortunately illegible) a whole and simple number of bars (or pounds per sq. inch) is balanced by a mass of 1 kg.

10. Device according to any one of the preceding Claims, characterised in that the said measuring unit (A) is separable from the means (C) in order to connect the lower end of the piston (2) to the upper end of the shaft (3) in order to be able to apply to these means calibrated masses (48 or 4B?) corresponding to the measuring zone of the balance (B), which renders the device capable of autocalibration.

11. Device according to any one of the preceding Claims, characterised in that it comprises a member (51) the weight of which is added to the force applied by the piston (2) to the said shaft (3) which makes it possible to measure both the negative pressure and an over-pressure in relation to atmospheric pressure.

12. Device according to Claim 11, characterised in that it comprises a double lubricating circuit with two separate reservoirs (14, 52), the lubricant contained in one (52) of the two reservoirs serving to lubicate the piston (2) during measurement of a negative pressure, while the lubricant contained in the other (14) of the two reservoirs serves to lubricate the piston (2) during measurement of an over-pressure.

**Ansprüche**

1. Einrichtung zur präzisen Fluiddruckmessung und Anzeige des gemessenen Drucks, mit einer Meßeinheit (A), die einen vertikalen Zylinder (1) und einen vertikalen Kolben (2) aufweist, der in dem erwähnten Zylinder (1) unter viskoser Reibung verschiebbar ist, wobei der Kolben (2) ein oberes und ein unteres Ende aufweist, dadurch gekennzeichnet, daß der erwähnte vertikale Kolben (2) mit viskoser Reibung in dem erwähnten vertikalen Zylinder (1) drehbar ist und daß sie ferner aufweist : eine dynamometrische elektromagnetische Präzisionswaage (B), die einen vertikalen Schaft (3) mit einem oberen Ende und Anzeigemittel (42) zum Anzeigen der auf das obere Ende des erwähnten vertikalen Schafts (3) ausgeübten Kraft aufweist ; Mittel zur Aufnahme der erwähnten Meßeinheit (A) in unbeweglicher Weise auf der erwähnten Waage (B) ; Mittel (C) zum Verbinden des unteren Endes des erwähnten Kolbens (2) mit dem oberen Ende des erwähnten Schafts (3), so daß aud dieses obere Ende die Kraft übertragen wird, der dieses untere Ende ausgesetzt ist, und zwar unter Begrenzung der maximalen übertragenen Kraft ; Mittel (4-11) für einen Drehantrieb des erwähnten Kolbens (2) in dem erwähnten Zylinder (1) ; und Druckübertragungsmittel (12-24) zum Ausüben des zu messenden Drucks auf das obere Ende des erwähnten Kolbens (2).

2. Einrichtung nach Anspruch 1, dadurch gekennzeichnet, daß die erwähnten Mittel (C) zum Verbinden des unteren Endes des erwähnten Kolbens (2) mit dem oberen Ende des erwähnten Schafts (3) eine Stange (37) und ein Wälzlager (39) in dem unteren Kopf des Kolbens (2) aufweisen.

3. Einrichtung nach Anspruch 2, dadurch gekennzeichnet, daß die erwähnten Verbindungsmittel (C) ferner ein Axialkugellager (38) aufweisen.

4. Einrichtung nach Anspruch·2 oder 3, dadurch gekennzeichnet, daß am Ende der erwähnten Stange (37) ein doppelter Dämpfer (40, 41) und ferner ein Lastbegrenzer (42), der der erwähnten Stange (37) zugeordnet ist, vorgesehen sind.

5. Einrichtung nach Anspruch 1, dadurch gekennzeichnet, daß die erwähnten Mittel (C) zum Verbinden des unteren Endes des erwähnten Kolbens (2) mit dem oberen Ende des erwähnten Schafts (3) eine Kugel (59), Mittel (60) zum Zentrieren der erwähnten Kugel (59) auf der Achse des Kolbens (2), einen mit der erwähnten Kugel (59) in Kontakt stehenden Bolzen (61) und einen mit der erwähnten Kugel (59) in Kontakt stehenden Dämpfer (62) aufweisen.

6. Vorrichtung nach einem der vorstehenden Ansprüche, dadurch gekennzeichnet, daß die Drehgeschwindigkeit des Kolbens (2) einer vollständigen Umdrehungsdauer desselben in dem Zylinder (1) entspricht, die kleiner als die Integrationszeit der elektronischen Meßeinrichtung der Waage (B) ist, um eine stabile Anzeige zu erhalten, die durch den Mittelwert der auf den Kolben (2) im Verlaufe seiner sich an eine vollständige Umdrehung anschließenden Drehung ausgeübten Kräfte bestimmt ist.

7. Einrichtung nach einem der vorstehenden Ansprüche, dadurch gekennzeichnet, daß sie Mittel (6, 7) zur Begrenzung des Drehmoments der Mittel (4) für den Drehantrieb des Kolbens (2) in dem Zylinder (1) im Falle einer Blockierung des Kolbens (2) in dem Zylinder (1), beispielsweise durch einen Überdruck, aufweist.

8. Einrichtung nach einem der vorstehenden Ansprüche dadurch gekennzeichnet, daß die erwähnte Meßeinheit (A) austauschbar ist, wobei der wirksame Abschnitt der Zylinder-Kolben-Anordnung (1, 2) von einer Meßeinheit (A) zur anderen unterschiedlich ist, um verschiedene Druckeinheiten in dem gleichen Meßbereich der Waage (B) messen zu können.

9. Einrichtung nach einem der vorstehenden Ansprüche, dadurch gekennzeichnet, daß der wirksame Abschnitt der Zylinder-Kolben-Anordnung (1, 2) der Meßeinheit (A) so gewählt ist, daß bei Normaldruck, Normaltemperatur und normaler Erdbeschleunigung eine ganzzahlige Anzahl von Bar (oder englischen Pfund pro Quadratzoll) mit einer Masse von 1 Kilogramm im Gleichgewicht steht.

10. Einrichtung nach einem der vorstehenden Ansprüche, dadurch gekennzeichnet, daß die erwähnte Meßeinheit (A) von den Mitteln (C) zum Verbinden des unteren Endes des Kolbens (2) mit dem oberen Ende der Welle (3) trennbar ist, um an diese Mittel Massen (48) anbringen zu können, die entsprechend einem Meßbereich der Waage (B) geeicht sind, so daß die Einrichtung selbsteichbar ist.

11. Einrichtung nach einem der vorstehenden Ansprüche, dadurch gekennzeichnet, daß sie ein Stück (51) aufweist, dessen Gewicht die Kraft erhöht, die durch den Kolben (2) auf den erwähnten Schaft (3) ausgeübt wird, so daß sowohl ein Unterdruck als auch ein Überdruck im Verhältnis zum Atmosphärendruck gemessen werden kann.

12. Einrichtung nach Anspruch 11, dadurch gekennzeichnet, daß sie einen doppelten Schmierkreis mit zwei getrennten Vorratskammern (14, 52) aufweist, wobei das in der einen (52) der beiden Vorratskammern enthaltene Schmierfluid beim Messen eines Überdrucks zum Schmieren des Kolbens (2) und das in der anderen (14) der beiden Vorratskammern enthaltene Schmierfluid beim Messen eines Überdrucks zum Schmieren des Kolbens (2) dient.

Fig.1.

0 039 293

Fig.2.

Fig.3.

0 039 293

# Fig.4.